(19) Europäisches Patentamt
European Patent Office
Office européen des brevets

(11) **EP 3 353 024 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
**B60T 8/1766** *(2006.01)*  **B60T 8/18** *(2006.01)*

(21) Anmeldenummer: **16770452.7**

(86) Internationale Anmeldenummer:
**PCT/EP2016/070907**

(22) Anmeldetag: **06.09.2016**

(87) Internationale Veröffentlichungsnummer:
**WO 2017/050555 (30.03.2017 Gazette 2017/13)**

(54) **VERFAHREN ZUM SCHÄTZEN EINER ACHSLASTVERTEILUNG BEI EINEM LASTZUG**

METHOD FOR ESTIMATING AN AXLE LOAD DISTRIBUTION IN A ROAD TRAIN

PROCÉDÉ D'ÉVALUATION D'UNE RÉPARTITION DE CHARGE SUR ESSIEU DANS LE CAS D'UN TRAIN ROUTIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2015 DE 102015115852**

(43) Veröffentlichungstag der Anmeldung:
**01.08.2018 Patentblatt 2018/31**

(73) Patentinhaber: **KNORR-BREMSE Systeme für Nutzfahrzeuge GmbH**
**80809 München (DE)**

(72) Erfinder:
• **SKRABAK, Attila**
**1224 Budapest (HU)**
• **SÖNFELD, Jozsef**
**1037 Budapest (HU)**
• **SIMON, Laszlo**
**1116 Budapest (HU)**
• **JUHASZ, György**
**1115 Budapest (HU)**
• **BOZSVARI, Gabor**
**1119 Budapest (HU)**
• **SZALAY, Zsolt**
**1117 Budapest (HU)**
• **CSERHALMI, György**
**1125 Budapest (HU)**
• **BAKSA, Istvan**
**8792 Zalaveg (HU)**

(56) Entgegenhaltungen:
EP-A1- 2 371 586  DE-A1- 19 707 210
US-A- 5 163 742  US-A1- 2005 017 577
US-A1- 2007 150 172  US-A1- 2009 204 318

**Beschreibung**

Die Erfindung geht aus von einer Vorrichtung oder einem Verfahren nach Gattung der unabhängigen Ansprüche. Gegenstand der vorliegenden Erfindung ist auch ein Computerprogramm.

Bei einem Lastzug ist es erforderlich, eine Achslastverteilung zu kennen, um an den einzelnen Achsen angepasste Bremsmomente bereitstellen zu können. Die Achslastverteilung kann unter Verwendung von Lastsensoren an den Achsen erfasst werden. Wenn die Achslastsensoren ausfallen, ist eine bestimmungsgemäße Bremskraftverteilung schwierig.

Die Druckschrift US 2005/017577 A1 offenbart ein Verfahren und ein System zur Steuerung einer Bremsaktuierungsenergie in einer Fahrzeugkombination.

Die Druckschrift EP 2 371 586 A1 offenbart ein Verfahren zur Stuuerung einer fluidischen Aktuierung einer Bremse oder eines Aufhängugnsmechanismus.

Die Druckschrift US 2007/0150172 A1 offenbart ein Verfahren und eine Vorrichtung zur computer-gestützten Berechnung der Achlasten eines Fahrzeugs.

Vor diesem Hintergrund werden mit dem hier vorgestellten Ansatz ein Verfahren zum Schätzen einer Achslastverteilung bei einem Lastzug, weiterhin eine Vorrichtung, die dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Bei ausgefallenen Achslastsensoren und/oder bei Fahrzeugen ohne solche Sensoren kann die Last auf die jeweilige Achse unter Verwendung sekundärer physikalischer Größen erfasst werden. Da die Last auf die Achse die Luftreifen der Räder der Achse komprimiert, verändert sich ein effektiver Rollradius der Räder abhängig von der Last.

Der veränderte Rollradius eines Rads wird in einer veränderten Umdrehungsgeschwindigkeit des Rads abgebildet. Die Umdrehungsgeschwindigkeit ist beispielsweise über ABS-Sensoren einfach erfassbar.

Die Umdrehungsgeschwindigkeit wird zusätzlich durch am Rad wirkende Drehmomente beziehungsweise einen durch die Drehmomente verursachten Schlupf der Luftreifen beeinflusst.

Bei dem hier vorgestellten Ansatz werden die Einflüsse durch die Drehmomente genutzt, um auf die Last zu schließen.

Es wird ein Verfahren zum Schätzen einer Achslastverteilung bei einem Lastzug 2. nach Anspruch 1 vorgestellt, wobei das Verfahren einen Schritt des Ermittelns aufweist, in dem zumindest eine Last auf eine Achse des Lastzugs unter Verwendung eines Schlupfwerts und eines Kraftwerts ermittelt wird, wobei der Schlupfwert einen Schlupf zwischen der Achse und einer weiteren Achse des Lastzugs repräsentiert und der Kraftwert eine antreibende oder verzögernde Kraft an der Achse repräsentiert.

Unter einem Lastzug kann ein Fahrzeuggespann verstanden werden, das aus einem Lastkraftwagen als ziehendes Fahrzeug und einem Anhänger als gezogenes Fahrzeug oder einer Sattelzugmaschine als ziehendes Fahrzeug und einem Sattelauflieger als gezogenes Fahrzeug besteht. Eine Last kann eine Normalkraft, also eine senkrecht zu einer Aufstandsfläche wirkende Gewichtskraft sein. Ein Schlupfwert kann einen Unterschied zwischen einer Umdrehungsgeschwindigkeit an der betrachteten Achse und einer zweiten Umdrehungsgeschwindigkeit an einer Bezugsachse abbilden.

Die Last wird ferner unter Verwendung eines frei rollenden Schlupfwerts ermittelt .

Der frei rollende Schlupfwert repräsentiert den Schlupf zwischen der Achse und der weiteren Achse, wenn die Kraft an beiden Achsen kleiner als ein Schwellenwert ist. Der frei rollende Schlupfwert wird nicht von der antreibenden oder verzögernden Kraft beeinflusst. Der frei rollende Schlupfwert kann in einem Speicher hinterlegt sein. Der frei rollende Schlupfwert kann ermittelt werden, wenn keine antreibende oder verzögernde Kraft wirkt.

Das Verfahren weist einen Schritt des Erfassens auf, in dem im Betrieb des Lastzugs ein erster Fahrzeugzustand und zumindest ein zweiter Fahrzeugzustand erfasst werden. Im ersten Fahrzeugzustand werden ein erster Schlupfwert und ein erster Kraftwert erfasst. Im zweiten Fahrzeugzustand werden ein zweiter Schlupfwert und ein zweiter Kraftwert erfasst. Der frei rollende Schlupfwert kann unter Verwendung des ersten Fahrzeugzustands und des zweiten Fahrzeugzustands bestimmt werden. Durch zumindest zwei Punkte an unterschiedlichen Fahrzeugzuständen kann ein Zusammenhang zwischen dem Schlupf und der Kraft beschrieben werden. Aus dem Zusammenhang kann auf den frei rollenden Schlupf geschlossen werden, der im Wesentlichen abhängig von den Raddurchmesser-Differenzen ist.

Der zweite Fahrzeugzustand kann erfasst werden, wenn zwischen dem ersten Fahrzeugzustand und dem zweiten Fahrzeugzustand ein Unterschied zwischen einem rechten Radgeschwindigkeitswert der Achse und einem linken Radgeschwindigkeitswert der Achse kleiner als ein Grenzwert ist. Der Unterschied ist kleiner als der Grenzwert, wenn der Lastzug geradeaus fährt und der Unterschied nur durch unterschiedliche Reifenluftdrücke und/oder Reifenabnutzung hervorgerufen wird. Im Idealfall ist der Unterschied nahe null.

Der zweite Fahrzeugzustand kann erfasst werden, wenn der Schlupf zwischen dem ersten Fahrzeugzustand und dem zweiten Fahrzeugzustand monoton steigt oder fällt. Bei einem monoton steigenden oder fallenden Schlupf nimmt der Schlupf entweder zu oder ab.

Der zweite Fahrzeugzustand kann erfasst werden, wenn der Kraftwert zwischen dem ersten Fahrzeugzustand und dem zweiten Fahrzeugzustand monoton steigt oder fällt. Bei einem monoton steigenden oder fallenden Kraftwert nimmt der Kraftwert entweder zu oder ab.

Der zweite Fahrzeugzustand kann erfasst werden, wenn die Monotonie endet. Insbesondere kann der zweite Fahrzeugzustand erfasst werden, wenn der Schlupf aufhört, monoton zu steigen oder fallen beziehungsweise der Kraftwert aufhört monoton zu steigen oder fallen.

Die Last kann ferner unter Verwendung eines Schlupfsteifigkeitswerts der Achse ermittelt werden. Der Schlupfsteifigkeitswert repräsentiert Schlupfsteifigkeiten von Rädern der Achsen. Eine Schlupfsteifigkeit bildet eine Flexibilität der Luftbereifung ab, durch welche die Reifen aufgrund einer Drehmomentbelastung einen Schlupf aufweisen. Durch den Schlupfsteifigkeitswert kann der Kraftwert in einen Antriebsschlupf oder Bremsschlupf umgerechnet werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner eine Vorrichtung nach Anspruch 7, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Fig. 1     eine Darstellung eines Lastzugs mit einem Modul zum Schätzen einer Achslastverteilung gemäß einem Ausführungsbeispiel;

Fig. 2     eine Darstellung eines Sattelzugs mit einem Modul zum Schätzen einer Achslastverteilung gemäß einem Ausführungsbeispiel;

Fig. 3     ein Blockschaltbild eines Systems zum Schätzen einer Achslastverteilung gemäß einem Ausführungsbeispiel; und

Fig. 4     ein Ablaufdiagramm eines Verfahrens zum Schätzen einer Achslastverteilung gemäß einem Ausführungsbeispiel.

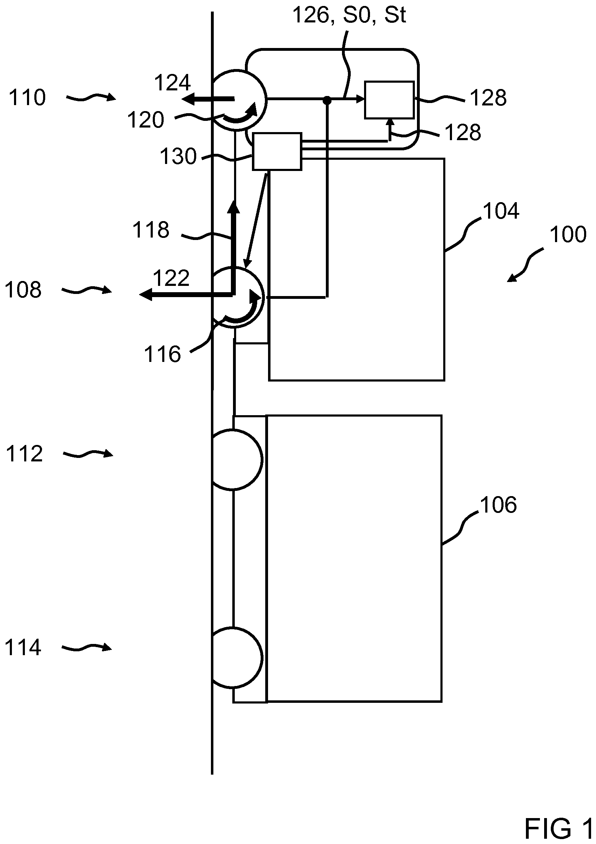

Fig. 1 zeigt eine Darstellung eines Lastzugs 100 mit einem Modul 102 zum Schätzen einer Achslastverteilung gemäß einem Ausführungsbeispiel. Das Modul 102 kann auch als Vorrichtung 102 bezeichnet werden. Das Modul 102 ist ein Bestandteil eines elektronischen Bremssystems des Lastzugs 100. Der Lastzug 100 besteht hier aus einem Zugfahrzeug 104 beziehungsweise ziehenden Fahrzeug 104 und einem Anhänger 106. Das Zugfahrzeug 104 ist ein Lastkraftwagen 104 beziehungsweise LKW 104 und weist eine Ladefläche zum Transportieren eines Teils der Ladung des Lastzugs auf. Der Rest der Ladung wird auf dem Anhänger 106 transportiert. Das Zugfahrzeug 104 weist eine angetriebene Antriebsachse 108 beziehungsweise Hinterachse 108 und eine nicht angetriebene, gelenkte Laufachse 110 beziehungsweise Vorderachse 110 auf. Der Anhänger 106 weist einen gelenkten Drehschemel 112 und eine starre hintere Achse 114 auf. Der Drehschemel 112 ist über eine Deichsel mit einer Anhängerkupplung des Zugfahrzeugs 104 verbunden.

Die Antriebsachse 108 des LKW 104 ist mit einem Antriebsstrang des LKW 104 verbunden. Über den Antriebsstrang wird ein antreibendes Drehmoment auf die Antriebsachse 108 übertragen. Durch das Drehmoment werden die Räder der Antriebsachse 108 in Drehung 116 versetzt. Durch die Drehung 116 rollen die Räder auf dem Untergrund ab und es resultiert eine antreibende Kraft 118 an der Antriebsachse 108.

Die Laufachse 110 ist nicht mit dem Antriebsstrang verbunden. Die Räder der Laufachse 110 werden durch die Bewegung des Lastzugs 100 in Drehung 120 versetzt. Der Lastzug 100 weist an allen Achsen Bremsen auf. Während eines Bremsvorgangs wirkt an allen Achsen eine hier nicht dargestellte verzögernde Kraft. Die verzögernde Kraft wirkt entgegengesetzt zu der antreibenden Kraft.

Die Räder des Lastzugs 100 sind luftbereift. Durch eine Belastung der Achsen 108, 110, 112, 114 werden die Reifen verformt, sodass sie während der Drehung 116, 120 eine Walkbewegung ausführen. Dabei ist ein Grad der Verformung abhängig von einer Last 122, 124 auf die einzelne Achse 108, 110. Durch die Verformung ergeben sich unterschiedliche Rollradien.

Aufgrund unterschiedlicher Rollradien ergeben sich bei einer Gesamtgeschwindigkeit des Lastzugs 100 unterschiedliche Drehgeschwindigkeiten 116, 120 an den Rädern der Achsen 108, 110. Zusätzlich werden die flexiblen Reifen an der angetriebenen Achse 108 durch das antreibende Drehmoment weiter verformt. Das antreibende Drehmoment resultiert in einem Antriebsschlupf. Wie weit sich die Reifen unter dem Drehmoment verformen, kann durch einen Schlupfsteifigkeitswert abgebildet werden. Wenn kein antreibendes Drehmoment wirkt, ergeben die unterschiedlichen Drehgeschwindigkeiten 116, 120 einen frei rollenden Schlupf. Zusammen ergeben der Antriebsschlupf und der frei rollende Schlupf einen Gesamtschlupf. Der Gesamtschlupf kann durch ein Erfassen der Drehgeschwindigkeiten 116, 120 gemessen werden.

Das Modul 102 ist dazu ausgebildet, eine Achslastverteilung des Lastzugs 100 zu schätzen. Dazu weist das Modul 102 eine Ermittlungseinrichtung auf, die zumindest die Last 122 auf die Antriebsachse 108 unter Verwendung eines Schlupfwerts 126 und eines Kraftwerts 128 ermittelt. Der Schlupfwert 126 repräsentiert den Gesamtschlupf zwischen der Antriebsachse 108 und der Vorderachse 110. Der Kraftwert 128 repräsentiert die antreibende Kraft 118 an der Antriebsachse 108 oder die verzögernde Kraft. Der Schlupfwert 126 wird beispielsweise in einem hier nicht dargestellten Fahrzeugsteuergerät unter Verwendung der Drehgeschwindigkeiten 116, 120 bestimmt. Der Kraftwert 128 wird hier von einem Steuergerät 130 des Antriebsstrangs bereitgestellt. Der Kraftwert 128 kann beispielsweise aus einer momentan bereitgestellten Antriebsleistung abgeleitet werden.

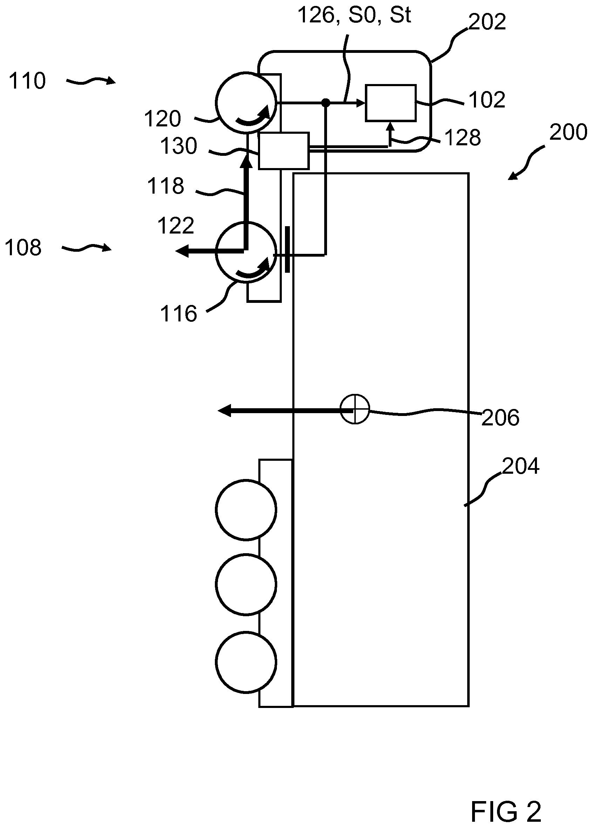

**Fig. 2** zeigt eine Darstellung eines Sattelzugs 200 mit einem Modul 102 zum Schätzen einer Achslastverteilung gemäß einem Ausführungsbeispiel. Die Darstellung entspricht im Wesentlichen der Darstellung in Fig. 1. Der Sattelzug 200 besteht aus einer Sattelzugmaschine 202 und einem Auflieger 204. Bei dem Sattelzug 200 wird die gesamte Ladung auf dem Auflieger transportiert. Die Sattelzugmaschine 202 weist keine eigene Ladefläche auf. Ein Anteil des Gewichts der Ladung wird durch die Sattelzugmaschine 202 abgestützt.

Wie in Fig. 1 ist das Modul 102 dazu ausgebildet, eine Achslastverteilung des Sattelzugs 200 zu schätzen. Dazu weist das Modul 102 die Einrichtung zum Ermitteln auf, die zumindest die Last 122 auf die Antriebsachse 108 unter Verwendung eines Schlupfwerts 126 und eines Kraftwerts 128 ermittelt. Da die Sattelzugmaschine keine eigene Zuladung aufweist, ergibt sich die Last 122 hier aus einer Schwerpunktposition 206 der Ladung.

Die Figuren 1 und 2 zeigen schematische Darstellungen einer antriebsschlupfbasierten beziehungsweise bremsschlupfbasierten Achslastschätzung.

Durch den hier vorgestellten Ansatz kann ein Ladungszustand einer Fahrzeugkombination 100, 200 geschätzt werden. Falls das ziehende Fahrzeug 104, 202 eine Zugmaschine 202 ist, wird eine Position des Schwerpunkts 206 der Ladung des Sattelaufliegers 204 geschätzt. Falls das ziehende Fahrzeug 104, 202 ein Lastwagen 104 ist, wird eine Zuladung des ziehenden Fahrzeugs 104 geschätzt. Der Ladungszustand wird nicht geschätzt, wenn er aus einer gut geschätzten Gesamtmasse des Gesamtfahrzeugs 100, 200 abgeleitet werden kann. In diesem Fall wird durch die antriebsschlupfbasierte Achslastschätzung eine Schlupfsteifigkeit der angetriebenen Achsen gelernt.

Weiterhin kann die Last des ziehenden Fahrzeugs 104, 202 gelernt werden, wenn ein Anhänger 106, 204 mit dem Fahrzeug 104, 202 verbunden ist und kein Achslastsensor vorhanden ist. Das Wissen um die Beladungssituation des Zugfahrzeugs 104, 202 ist erforderlich, um eine Bremsdruckverteilung zwischen dem Teilen des Lastzugs 100 oder zwischen den Achsen 108, 110 des ziehenden Fahrzeugs 104, 202 zu ermitteln.

Die hier vorgestellte Funktion schätzt die Last 122 basierend auf Radgeschwindigkeitsverhältnissen zwischen Achsen 108, 110, die über Radgeschwindigkeitssensoren gemessen werden, wenn das Radgeschwindigkeitsverhältnis mit dem Schlupf der Achsen 108, 110 korrespondiert.

Als Achsenschlupf $s$ 126 wird eine gemessene relative Geschwindigkeitsdifferenz zwischen zwei Achsen 108, 110 bezeichnet. Der Achsenschlupf 126 setzt sich aus einem frei rollenden Schlupf $s_0$ und einem Antriebsschlupf $s_t$ zusammen.

Der freie rollende Schlupf $s_0$ ist eine relative Geschwindigkeitsdifferenz zwischen zwei Achsen 108, 110 wenn keine Antriebskraft 118 oder Bremskraft auf die Räder der betrachteten Achsen 108, 110 wirkt. Dies ist kein physikalischer Schlupf, aber die Geschwindigkeitsdifferenz wird durch unterschiedlich weite Wege oder ungleiche Rollbedingungen verursacht.

Der Antriebsschlupf $s_t$ ist eine relative Geschwindigkeitsdifferenz zwischen einer frei rollenden Achse 110 und einer angetriebenen Achse 108 und wird durch ein Antriebsdrehmoment der angetriebenen Achse 108 erzeugt.

Ein Achsenseitenschlupf $s_{axlelr}$ ist eine relative Geschwindigkeitsdifferenz der beiden Räder einer Achse 108, 110.

Die Antriebskraft $F_{longitudinal}$ 118 ist die Summe der Radkräfte der betrachteten angetriebenen Achse 108, die nur durch das beschleunigende Drehmoment erzeugt wird.

Die Antriebskraft 118 wird durch eine automatische Traktionssteuerung überwacht und begrenzt. Die minimale Antriebskraft 118 wird währenddessen gespeichert und der halbe Wert des Minimums wird danach als Antriebskraftlimit für die Traktionssteuerung verwendet. Dieses Limit wird mit vordefinierten Schritten, zum Beispiel mit 50 N/s erhöht, falls keine Antriebskraftbegrenzung eintritt und die tatsächliche Antriebskraft 118 höher als dieses Limit ist.

Die Normalkraft $F_{normal}$ 122 ist die senkrecht zur Straße wirkende Kraftkomponente zwischen der Straße und der betrachteten Antriebsachse 108.

Die Radschlupfsteifigkeit wird wie folgt kalkuliert.

$$T_{SS} = \frac{F_{longitudinal}}{F_{normal} \cdot s_t}$$

Es kann eine Differenzschlupfsuche durchgeführt werden. Die Schätzungen der dynamischen Last 122 auf der angetriebenen Achse 108 und der Schlupfsteifigkeit der angetriebenen Achse 108 basieren auf der Suche von Schlupf/Antriebskraft Punktpaaren.

Das Ziel der Differenzschlupfsuche ist es zwei Fahrzeugzustände zu finden, bei denen der Antriebsschlupf monoton zwischen den beiden Fahrzeugzuständen steigt, die Antriebskraft 118 zwischen den beiden Fahrzeugzuständen monoton steigt, kein effektiver Bremsdruck wirkt, die Antriebskraft 118 nicht durch die Traktionssteuerung begrenzt wird, die tatsächliche Antriebskraft 118 unterhalb des Antriebskraftlimits der Traktionssteuerung liegt und der Achsenseitenschlupf für die betrachtete angetriebene Achse 108 und die Referenzachse 110 konstant ist. Diese Bedingung stellt sicher, dass der Kurvenradius des Fahrzeugs 100, 200 konstant ist und kein angetriebenes Rad während der Differenzsuche durchdreht. Zusätzlich sollten zumindest ein vordefinierter minimaler Unterschied, zum Beispiel 0,5 % im Antriebsschlupf und ein vordefinierter minimaler Unterschied der Antriebskraft 118, zum Beispiel 500 N zwischen den beiden Fahrzeugzuständen sein. Der zweite Fahrzeugzustand kann aufgenommen werden, wenn die Monotonie des Antriebsschlupfs oder der Antriebskraft 118 aufhört oder der Achsenseitenschlupf sich ändert.

Die Suche beginnt von vorne, wenn keine Antriebskraft 118 oder eine negative Antriebskraft 118 gemessen wird oder die tatsächliche Antriebskraft 118 weniger als ein Drittel des zuletzt gefundenen Lastmaximums ist. Der Antriebsschlupf des ersten Fahrzeugzustands wird auf einen Nullpunkt interpoliert/extrapoliert, wenn ein Nulldurchgang der Antriebskraft 118 gefunden wird. Wenn kein Nulldurchgang der Antriebskraft 118 gefunden wird und ein extern berechneter frei rollender Schlupf $s_0$ vorhanden ist, wird dieser anstatt des interpolierten/extrapolierten Antriebsschlupfs verwendet.

Nach einer erfolgreichen Differenzschlupfsuche sind der frei rollende Schlupf $s_0$, der ohne Antriebskraft 118 anfällt, der Achsenschlupf $s$, der bei einer höheren Zugkraft auftritt, und die höhere Zugkraft $F_{longitudinal}$ bekannt. Mit der ebenso bekannten Schlupfsteifigkeit kann die tatsächliche dynamische Achslast 122 auf der angetriebenen Achse 108 berechnet werden.

$$F_{normal} = \frac{F_{longitudinal}}{T_{SS}(s - s_0)}$$

Diese Berechnung wird durchgeführt, wenn die Qualität einer gesamtmassenbasierten Achslastschätzung geringer als ein vorkonfigurierter Schwellenwert ist. Andernfalls schätzt die antriebsschlupfbasierte Achslastschätzung die Schlupfsteifigkeit der Reifen. Die dynamische Lastschätzung für die angetriebene Achse verwendet die geschätzte Reifenschlupfsteifigkeit. Wenn sie nicht vorhanden ist, wird eine vorkonfigurierte Schlupfsteifigkeit verwendet. Im Falle eines Reifenwechsels an einer angetriebenen Achse 108 wird ebenfalls die vorkonfigurierte Schlupfsteifigkeit verwendet.

Es erfolgt eine Ladungsschätzung am ziehenden Fahrzeug 104 oder eine Schätzung einer Ladungsposition 206 am Sattelauflieger 204.

Falls das Fahrzeug 104, 202 ein Lastwagen 104 ist und die tatsächliche dynamische Last 122 auf einer angetriebenen Achse 108 geschätzt wird, wird die Last des Zugfahrzeugs 104 über einen Aufruf des invertierten Fahrzeugmodells geschätzt. Das invertierte Fahrzeugmodell berechnet unbekannte Fahrzeugparameter, in diesem Fall die Last des ziehenden Fahrzeugs 104, mit einer Newton-Raphson Methode unter Verwendung der bekannten Parameter. Der gleitende Mittelwert des gewichteten inversen Fahrzeugmodells ist das Resultat der Schätzung der Last des ziehenden Fahrzeugs 104, wenn das Gewicht proportional zu dem Differenzschlupf ist, der die Basis der tatsächlichen dynamischen Achslastschätzung ist. Falls eine Änderung der Zuladung erkannt wird, wird die gleitende Mittelwertkalkulation neu gestartet.

Falls der Fahrzeugtyp eine Zugmaschine 202 ist und die tatsächliche dynamische Last 122 auf einer angetriebenen Achse 108 geschätzt wird, wird die Ladungsposition 206 des Sattelaufliegers 204 über einen Aufruf des invertierten Fahrzeugmodells geschätzt. Das invertierte Fahrzeugmodell berechnet die unbekannten Fahrzeugparameter, hier die Ladungsposition 206 des Sattelaufliegers 204, mit einer Newton-Raphson Methode unter Verwendung der bekannten Parameter. Der gleitende Mittelwert des gewichteten inversen Fahrzeugmodells ist das Resultat der Schätzung der Sattelauflieger Ladungsposition 206, wenn das Gewicht proportional zu dem Differenzschlupf, der die Basis der tatsächlichen dynamischen Achslastschätzung ist. Falls eine Änderung der Zuladung erkannt wird, wird die gleitende Mittelwertkalkulation neu gestartet.

Die Schlupfsteifigkeit der angetriebenen Achsen 108 wird berechnet, wenn die Ladungsverteilung des Fahrzeugs 104, 202 durch die gesamtmassenbasierte Achslastschätzung mit hoher Qualität berechnet ist. Dadurch sind die dynamischen Normalkräfte $F_{normal}$ 122 der angetriebenen Achse 108 auch durch das Fahrzeugmodell berechnet. Die Schätzung der Schlupfsteifigkeit der angetriebenen Achse 108 basiert auf den folgenden Gleichungen, die auf den zwei Fahrzeugzuständen aus der Differenzschlupfsuche basieren.

$$s_{t_1} = s_1 - s_0 = \frac{F_{longitudinal_1}}{T_{SS} \cdot F_{normal_1}}; \; s_{t_2} = s_2 - s_0 = \frac{F_{longitudinal_2}}{T_{SS} \cdot F_{normal_2}}$$

Die Differenz beider Gleichungen ist

$$s_1 - s_2 = \frac{F_{longitudinal_1}}{T_{SS} \cdot F_{normal_1}} - \frac{F_{longitudinal_2}}{T_{SS} \cdot F_{normal_2}}$$

So kann die Schlupfsteifigkeit aus den zwei Fahrzeugzuständen der Differenzschlupf Suche berechnet werden.

$$T_{SS} = \frac{F_{longitudinal_1}}{(s_1 - s_2) \cdot F_{normal_1}} - \frac{F_{longitudinal_2}}{(s_1 - s_2) \cdot F_{normal_2}}$$

Der gleitende Mittelwert der gewichteten Schlupfsteifigkeit $T_{ss}$ ist das Resultat der Sattelauflieger Ladungspositionsschätzung, bei der das Gewicht proportional zu der Differenzschlupfbasis der tatsächlichen dynamischen Achslastschätzung ist. Wenn ein Reifenwechsel detektiert wird, wird die gleitende Mittelwertschätzung neu gestartet. Die gelernten Schlupfsteifigkeiten werden im EPROM gespeichert, um für zukünftige dynamische Lastschätzungen an den angetriebenen Achsen vorhanden zu sein.

Der Zusammenhang zwischen Achsenpaar Geschwindigkeitsverhältnissen 126 unter Last ist abhängig von einer bekannten Fahrzeuggeometrie, Bremsfaktoren und unbekannter Schlupfsteifigkeit. Die Ladungsschätzung verwendet diesen Zusammenhang, um die Ladung zu bestimmen. Um das zu tun, bestimmt die Funktion die unbekannten Schlupfsteifigkeiten unter Verwendung derselben Zusammenhänge in umgekehrter Reihenfolge, wenn eine Ladung als bekannt angenommen wird.

Die hier vorgestellte Funktion ist ein passiver Beobachter der den Vorteil über aktive Regellösungen, wie beispielsweise die Schlupfkontrolle hat, dass sie die Regelung des Bremsdrucks durch unabhängige Funktionen, wie Abnutzungskontrolle, ermöglicht.

Der Zusammenhang zwischen der Last und den Radgeschwindigkeitsverhältnissen 126 ist im dynamischen Modell des Fahrzeugs 104, 202 abgebildet. Die Funktion löst diesen Zusammenhang in jedem Aufgabenzyklus , zum Beispiel alle 20 ms. Da das dynamische Modell zu komplex ist, um analytisch gelöst zu werden, wird es mit einer numerischen Newton-Raphson Funktion gelöst, die ein interaktiver Wurzelfinder Algorithmus für Skalar-Skalar Funktionen ist.

Der Algorithmus sucht den Wert des zu lernenden Parameters, bei dem das Fahrzeugmodell dieselben Radgeschwindigkeitsverhältnisse 126 ausgibt, die am Fahrzeug 104, 202 in dem betrachteten Moment gemessen werden.

Es erfolgt eine Lernphase. Die Parameterschätzung wird an angetriebenen Achsen 108 in angetriebenen Phasen durchgeführt. An frei laufenden beziehungsweise nicht angetriebenen Achsen 110 wird die Parameterschätzung in Bremsphasen durchgeführt. Die Schätzung wird unterbrochen, falls die tangentiale Radkraft kleiner als ein Schwellwert, zum Beispiel 2000 Newton ist.

Es kann jeweils ein Parameter geschätzt werden. Der geschätzte Parameter kann eine Schlupfsteifigkeit sein, wenn die Ladungsbedingungen als bekannt angenommen sind. Der geschätzte Parameter kann eine Last 122 auf dem ziehenden Fahrzeug sein, wenn ein über die Deichsel angehängter Anhänger 106 verbunden ist und die Ladungsbedingungen nicht bekannt sind. Der geschätzte Parameter kann eine axiale Schwerpunktposition 206 eines Sattelaufliegers 204 sein, wenn ein Sattelauflieger 204 verbunden ist und dessen Ladungsbedingungen nicht bekannt sind.

Schlupfsteifigkeiten werden achsenweise gelernt, wenn die Ladungsbedingungen als bekannt angenommen werden. Dies ist der Fall, wenn die Schätzungsqualität der Komponente gesamtmassenbasierte Achslastschätzung einen vordefinierten Schwellwert, zum Beispiel 95% erreicht. Die Schätzungsqualität der Komponente gesamtmassenbasierte der Achslastschätzung hängt von der Schätzungsqualität der Fahrzeuggesamtmasse und den Bedingungen ab, die bestimmen, wie gut sich die Ladungsbedingung des Zugfahrzeugs aus der Fahrzeuggesamtmasse ableiten lässt.

Folgende Logik wird verwendet: Die Ladungsbedingung ist bekannt, wenn das Fahrzeug 104, 202 alleine fährt und die Fahrzeuggesamtmasse bekannt ist. Die Ladungsbedingung ist bekannt, wenn der Lastzug 100, 200 ein Lastwagen 104 mit einem angehängten Anhänger 106 ist und beide Fahrzeugteile 104, 106 leer sind. Die Ladungsbedingungen sind bekannt, wenn der verbundene Anhänger 106 entweder ein zugstangengezogener Anhänger 106 oder ein Sattelauflieger 204, mit einem elektronischen Bremssystem am Anhänger ausgestattet ist und die Anhänger 106, 204 Achslasten über den CAN-Bus des Anhängers vorhanden sind und die Fahrzeuggesamtmasse bekannt ist.

Die Schlupfsteifigkeit hängt von einem Reifentyp oder Reifenzustand ab. Daher wird die gelernte Schlupfsteifigkeit auf einen vordefinierten Wert zurückgesetzt, wenn ein Reifenwechsel erkannt wird.

Um die Last beziehungsweise den Beladungszustand zu lernen, sind die zuvor gelernten Schlupfsteifigkeiten erforderlich. Bis diese Schlupfsteifigkeiten gelernt sind, werden die vordefinierten Werte verwendet. Im Falle eines Lastwagens 104 mit angehängtem Anhänger 106 wird die Last auf das Zugfahrzeug 104 gelernt. Im Fall einer Zugmaschine 202 mit Sattelauflieger 204 wird der axiale Abstand des Schwerpunkts 206 vom Königszapfen gelernt. Der Grund dafür ist, dass die Zugmaschine 202 selbst keine Nutzlast aufweist. Die Zugmaschine 202 wird durch den Sattelauflieger 204 belastet. Diese Art Zuladung ist nicht konstant und hängt von der Fahrzeugdynamik ab. Daher kann es nicht als Fahrzeugparameter verwendet werden.

Die Lastschätzung ist relativ schnell, da auch die angetriebenen Phasen mit berücksichtigt werden. Daher wird der Ladungszustand in jedem Zündzyklus gelernt und zurückgesetzt, wenn ein Ladungswechsel detektiert wird.

Es erfolgt eine Ausgabe Filterung und Qualität. Alle diese gelernten Parameter sind quasi konstant. Daher werden momentane Schätzungen dieser Parameter zusammen mit gewichteten Lagrange Filtern erster Ordnung achsenweise gefiltert, um stabile Schätzungen für jeden Parameter zu erhalten. Die Gewichtung der einzelnen Schätzungen hängt von ihrer Varianz ab.

Eine Qualität der Schätzung ist auf statistischen Berechnungen basiert. Die Varianzen der Haupteingangsgrößen werden von den verantwortlichen Komponenten bereitgestellt. Im Fall des Lernens der Schlupfsteifigkeit ergibt sich eine Varianz der geschätzten Schlupfsteifigkeit. Sowohl im Fall des Lernens der Schlupfsteifigkeit und der Last ergibt sich eine Varianz des geschätzten Raddurchmessers. Im Fall des Lernens der Last ergibt sich eine Varianzder Last des ziehenden Fahrzeugs 104, 202. Diese Varianzen werden durch das Fahrzeugmodell verbreitet. Dadurch ist die theoretische Varianz der Schätzung der Last oder des Schwerpunkts 206 in jedem Schätzungszyklus abrufbar und beide sind von der Varianz der Schlupfsteifigkeiten abhängig, die für die Lastschätzung verwendet wurden.

Diese momentanen Varianzen werden zusammen mit dem geschätzten Parameterwert Filtern in einem gemeinsamen Wert gefiltert. Auf diese Art und Weise ist die theoretische Varianz der gelernten Punkte von verschiedenen Schätzern wie einem gesamtmassenbasierten Schätzer, bremsschlupfbasierten Schätzer und antriebsschlupfbasiereten Schätzer bekannt. Daraus ergibt sich die Varianz des geschätzten Werts eines Schätzers.

$$Var(estimation) = \frac{Var(collection)}{n}$$

Dabei ist n die Anzahl der erfassten Punkte.

Durch diese Methode ergibt sich natürlicherweise, dass Punkte mit einer höheren Unsicherheit beziehungsweise einer höheren Varianz weniger Effect auf das Endergebnis haben. Die unterschiedlichen Schätzungen werden in einer endgültigen Schätzung koordiniert. Die endgültige Schätzung basiert auf der dem Verhältnis der Anzahl erfasster Punkte und der Schätzungsvarianz. Je höher dieser Wert ist umso höher ist die Gewichtung der Achsenschätzung.

Die koordinierte endgültige Schätzungsvarianz der Schätzungen wird in zwei Schritten erzeugt. Zuerst wird die endgültige Schätzungsvarianz als gewichteter Mittelwert zusammengefasst, dann wird die Schätzungsvarianz durch die Varianz die durch die verschiedenen Hauptwerte der verschiedenen Schätzungen erzeugter Varianz korrigiert.

Nach der statistischen Berechnung ist ein endgültiger geschätzter Parameter mit seiner Varianz verfügbar. Aus dieser Schätzungsvarianz wird eine Qualität berechnet. Dazu wird ein Zuversichtsintervall verwendet, der zum Beispiel 1500 kg Zuladung oder einem halben Meter Schwerpunktverschiebung repräsentiert. Praktisch bedeutet das, dass wenn die Schätzungsvarianz gleich dem Zuversichtsintervall ist, die Schätzungsqualität 68, 3 % beträgt.

Jede gelernte Schlupfsteifigkeit wird in einem EPROM gespeichert, um in zukünftigen Zündungsphasen verfügbar zu sein. Basierend auf diesen gespeicherten Schlupfsteifigkeiten können weitere Lernzyklen der Ladung beziehungsweise des Ladungszustands durchgeführt werden. Gelernte Zuladungen werden nicht gespeichert.

Die geschätzten Parameter passen sich Veränderungen der Zuladung oder der Schlupfsteifigkeit aufgrund von starken Ausgangsfiltern nur langsam an. Um signifikante Veränderungen schnell zu lernen, beispielsweise durch einen Reifenwechsel oder eine Zuladung Veränderung, werden die Filter in bestimmten Situationen neu gestartet. Die Zuladungsschätzung startet mit jeder Zündung neu oder wenn ein Ladungsänderungserkennungsmodul eine Beladungsänderung signalisiert. Die Schlupfsteifigkeitsschätzung startet neu, wenn ein Reifenwechsel auf irgendeiner Achse erkannt wird.

Für den hier vorgestellten Ansatz wird ein funktionierender EEPROM benötigt. Weiterhin wird der hier vorgestellte Ansatz während einer Kurvenfahrt ausgesetzt, um Fehler aufgrund von verschiedenen Seitenschlüpfen auszuschließen. Ebenso wird der hier vorgestellte Ansatz nur oberhalb einer Mindestgeschwindigkeit ausgeführt, um ein Lernen unterhalb einer Luftspaltgeschwindigkeit zu verhindern.

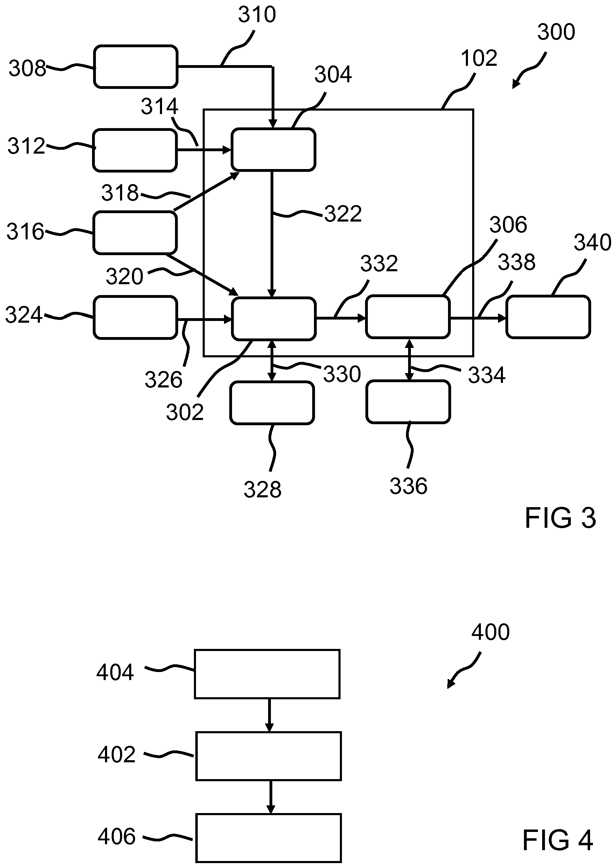

Fig. 3 zeigt ein Blockschaltbild eines Systems 300 zum Schätzen einer Achslastverteilung gemäß einem Ausführungsbeispiel. Das Modul 102, wie es beispielsweise in den Figuren 1 und 2 dargestellt ist, ist ein Bestandteil des Systems 300. Hier weist das Modul 102 eine Ermittlungseinrichtung 302, einen Lernphasenkoordinator 304 und Ausgangsfilter 306 auf. Das dargestellte System 300 umfasst hier weitere Module. Ein Ladungsänderungserkennungsmodul 308 stellt eine Ladungsänderungsinformation 310 für den Lernphasenkoordinator 304 bereit. Ein Raddurchmesserkompensationsmodul 312 stellt eine Reifenwechselinformation 314 für den Lernphasenkoordinator 304 bereit. Ein Gesamtmassenschätzer-Modul 316 stellt eine Qualitätsinformation 318 für den Lernphasenkoordinator 304 bereit. Weiterhin stellt das Gesamtmassenschätzer-Modul 316 eine Gesamtmasseninformation 320 für die Ermittlungseinrichtung 302 bereit. Der Lernphasenkoordinator 304 stellt eine Kontrollinformation 322 für die Ermittlungseinrichtung 302 unter Verwendung der Ladungsänderungsinformation 310, der Reifenwechselinformation 314 und der Qualitätsinformation 318 bereit. Ein Radgeschwindigkeitsfilter-Modul 324 stellt eine Radgeschwindigkeitsinformation 326 für die Ermittlungseinrichtung 302 bereit. Die Ermittlungseinrichtung 302 ist dazu ausgebildet, ein Fahrzeugmodell 328 zu berechnen beziehungsweise zu lösen. Dazu werden Parameter 330 des Fahrzeugmodells 328 angepasst und unbekannte Parameter geschätzt. Hier umfassen die Parameter 330 eine Last, Schlupfsteifigkeiten und die Radgeschwindigkeitsinformation 326. Die geschätzten Parameter 332 werden durch die Ausgangsfilter 306 gefiltert. Der Ausgangsfilter 306 stellt eine gefilterte Schlupfsteifigkeitsinformation 334 für einen Speicher 336 bereit. Weiterhin stellt der Ausgangsfilter 306 eine gefilterte Lastinformation 338 für ein Ladungskoordinationsmodul 340 bereit.

Fig. 4 zeigt ein Ablaufdiagramm eines Verfahrens 400 zum Schätzen einer Achslastverteilung gemäß einem Ausführungsbeispiel. Das Verfahren 400 kann beispielsweise auf einem Modul, wie es in den vorhergehenden Figuren dargestellt ist, ausgeführt werden. Das Verfahren 400 weist einen Schritt 402 des Ermittelns auf. Im Schritt 402 des Ermittelns wird zumindest eine Last auf eine Achse des Lastzugs unter Verwendung eines Schlupfwerts und eines Kraftwerts ermittelt. Dabei repräsentiert der Schlupfwert einen Schlupf zwischen der Achse und einer weiteren Achse des Lastzugs. Der Kraftwert repräsentiert eine antreibende oder verzögernde Kraft an der Achse.

In einem Ausführungsbeispiel geht dem Schritt 402 des Ermittelns ein Schritt 404 des Erfassens voraus. Im Schritt 404 des Erfassens werden der Kraftwert und der Schlupfwert an dem Lastzug erfasst. Insbesondere werden zumindest zwei unterschiedliche Wertepaare aus je einem Kraftwert und einem Schlupfwert erfasst. Unter Verwendung der Wertepaare wird beispielsweise durch eine Extrapolation ein frei rollender Schlupfwert bestimmt, der den Schlupf ohne antreibende oder verzögernde Kraft repräsentiert. Der frei rollende Schlupfwert wird im Schritt 402 des Ermittelns verwendet, um die Last zu ermitteln.

Im Schritt 404 des Erfassens können die Wertepaare erfasst werden, wenn der jeweilige Kraftwert und alternativ oder ergänzend der jeweilige Schlupfwert bestimmte Kriterien erfüllen. Beispielsweise kann das Erfassen während einer Kurvenfahrt des Lastzugs unterbrochen werden, um verwendbare Schlupfwerte zu erhalten. Ebenso kann zwischen den Wertepaaren ein Mindestunterschied des Schlupfwerts und/oder des Kraftwerts vorgegeben werden. Dabei kann auch vorgegeben sein, dass zwischen den betrachteten Wertepaaren der Schlupfwert und/oder der Kraftwert monoton steigt oder fällt. Insbesondere kann das zweite Wertepaar dann erfasst werden, wenn der Schlupfwert und/oder der Kraftwert aufhört, monoton zu steigen oder fallen.

In einem Ausführungsbeispiel weist das Verfahren 400 einen, dem Schritt 402 des Ermittelns nachfolgenden Schritt 406 des Verwendens auf. Im Schritt 406 des Verwendens wird die ermittelte Last auf die einzelne Achse dazu verwendet, eine Bremskraft des Lastzugs zu verteilen. Damit kann beispielsweise eine stark belastete Achse stärker gebremst werden, als eine schwach belastete Achse, ohne dass die Räder der Achsen bei einem Bremsvorgang unterschiedlich blockieren. Der Lastzug kann so mit dem geringstmöglichen Bremsweg abgebremst werden.

BEZUGSZEICHENLISTE

100    Lastzug

| | |
|---|---|
| 102 | Modul zum Schätzen |
| 104 | Zugfahrzeug, Lastkraftwagen |
| 106 | gezogenes Fahrzeug, Anhänger |
| 108 | Antriebsachse |
| 110 | Vorderachse |
| 112 | Anhängervorderachse |
| 114 | Anhängerhinterachse |
| 116 | Drehgeschwindigkeit der Antriebsachse |
| 118 | Antriebskraft |
| 120 | Drehgeschwindigkeit der Vorderachse |
| 122 | Last, Normal kraft |
| 124 | Vorderachslast |
| 126 | Schlupfwert |
| 128 | Kraftwert |
| 130 | Steuergerät |
| 200 | Sattelzug |
| 202 | Sattelzugmaschine |
| 204 | Sattelauflieger |
| 206 | Schwerpunktposition |
| 300 | System zum Schätzen |
| 302 | Ermittlungseinrichtung |
| 304 | Lernphasenkoordinator |
| 306 | Ausgangsfilter |
| 308 | Ladungsänderungserkennungsmodul |
| 310 | Ladungsänderungsinformation |
| 312 | Raddurchmesserkompensationsmodul |
| 314 | Reifenwechselinformation |
| 316 | Gesamtmassenschätzer-Modul |
| 318 | Qualitätsinformation |
| 320 | Gesamtmasseninformation |
| 322 | Kontrollinformation |
| 324 | Radgeschwindigkeitsfilter-Modul |
| 326 | Radgeschwindigkeitsinformation |
| 328 | Fahrzeugmodell |
| 330 | Parameter |
| 332 | geschätzter Parameter |
| 334 | Schlupfsteifigkeitsinformation |
| 336 | Speicher |
| 338 | Lastinformation |
| 340 | Ladungskoordinationsmodul |
| 400 | Verfahren zum Schätzen |
| 402 | Schritt des Ermittelns |
| 404 | Schritt des Erfassens |
| 406 | Schritt des Verwendens |

**Patentansprüche**

1. Verfahren (400) zum Schätzen einer Achslastverteilung bei einem Lastzug (100, 200), wobei das Verfahren (400) einen Schritt (402) des Ermittelns aufweist, in dem zumindest eine Last (122) auf eine Achse (108) des Lastzugs (100, 200) unter Verwendung eines Schlupfwerts (126) und eines Kraftwerts (128) ermittelt wird, wobei der Schlupfwert (126) einen Schlupf zwischen der Achse (108) und einer weiteren Achse (110) des Lastzugs (100, 200) repräsentiert und der Kraftwert (128) eine antreibende oder verzögernde Kraft (118) an der Achse (108) repräsentiert, **dadurch gekennzeichnet, dass** im Schritt (402) des Ermitteins die Last (122) ferner unter Verwendung eines frei rollenden Schlupfwerts (so) ermittelt wird, wobei der frei rollende Schlupfwert (so) den Schlupf zwischen der Achse (108) und der weiteren Achse (110) repräsentiert, wenn die Kraft (118) an beiden Achsen (108, 110) kleiner als ein Schwellenwert ist und wobei ein Schritt (404) des Erfassens vorgesehen ist, in dem im Betrieb des Lastzugs (100, 200) ein erster Fahrzeugzustand und zumindest ein zweiter Fahrzeugzustand erfasst werden, wobei im ersten Fahrzeugzustand ein erster Schlupfwert (126) und ein erster Kraftwert (128) erfasst werden und im zweiten Fahrzeugzustand ein zweiter Schlupfwert (126) und ein zweiter Kraftwert (128) erfasst werden, wobei der frei rollende Schlupfwert (so) unter Verwendung des ersten Fahrzeugzustands und des zweiten Fahrzeugzustands bestimmt wird.

**2.** Verfahren (400) gemäß Anspruch 1,
**dadurch gekennzeichnet, dass**
im Schritt (404) des Erfassens der zweite Fahrzeugzustand erfasst wird, wenn zwischen dem ersten Fahrzeugzustand und dem zweiten Fahrzeugzustand ein Unterschied zwischen einem rechten Radgeschwindigkeitswert (116) der Achse und einem linken Radgeschwindigkeitswert (116) der Achse (108) kleiner als ein Grenzwert ist.

**3.** Verfahren (400) gemäß einem der Ansprüche 1 bis 2,
**dadurch gekennzeichnet, dass**
im Schritt des Erfassens (404) der zweite Fahrzeugzustand erfasst wird, wenn der Schlupf zwischen dem ersten Fahrzeugzustand und dem zweiten Fahrzeugzustand monoton steigt oder fällt.

**4.** Verfahren (400) gemäß einem der Ansprüche 1 bis 3,
**dadurch gekennzeichnet, dass**
im Schritt (404) des Erfassens der zweite Fahrzeugzustand erfasst wird, wenn der Kraftwert (128) zwischen dem ersten Fahrzeugzustand und dem zweiten Fahrzeugzustand monoton steigt oder fällt.

**5.** Verfahren (400) gemäß einem der Ansprüche 3 oder 4,
**dadurch gekennzeichnet, dass**
im Schritt (404) des Erfassens der zweite Fahrzeugzustand erfasst wird, wenn die Monotonie endet.

**6.** Verfahren (400) gemäß einem der vorhergehenden Ansprüche,
**dadurch gekennzeichnet, dass**
im Schritt (402) des Ermittelns die Last (122) ferner unter Verwendung eines Schlupfsteifigkeitswerts der Achse (108) ermittelt wird, wobei der Schlupfsteifigkeitswert Schlupfsteifigkeiten von Rädern der Achse (108) repräsentiert.

**7.** Vorrichtung (102), die eingerichtet ist, die Schritte (402, 404) des Verfahrens (400) gemäß einem der vorangegangenen Ansprüche in entsprechenden Einheiten auszuführen und/oder anzusteuern.

**8.** Computerprogramm, das dazu eingerichtet ist, das Verfahren (400) gemäß einem der vorangegangenen Ansprüche auszuführen, wenn das Computerprogramm auf einem Computer oder einer Vorrichtung ausgeführt wird.

**Claims**

**1.** Method (400) for estimating an axle load distribution in a road train (100, 200), wherein the method (400) has a step (402) of ascertainment, in which at least one load (122) on an axle (108) of the road train (100, 200) is ascertained using a slip value (126) and a force value (128), wherein the slip value (126) represents a slip between the axle (108) and a further axle (110) of the road train (100, 200) and the force value (128) represents a tractive or decelerating force (118) at the axle (108),
**characterized in that** the load (122) is further ascertained using a freewheeling slip value (so) in the step (402) of ascertainment, wherein the freewheeling slip value (so) represents the slip between the axle (108) and the further axle (110) when the force (118) on both axles (108, 110) is less than a threshold value and wherein a step (404) of capture is provided, in which a first vehicle state and at least one second vehicle state are captured during the operation of the road train (100, 200), wherein a first slip value (126) and a first force value (128) are captured in the first vehicle state and a second slip value (126) and a second force value (128) are captured in the second vehicle state, wherein the freewheeling slip value (so) is determined using the first vehicle state and the second vehicle state.

**2.** Method (400) according to Claim 1,
**characterized in that**
the second vehicle state is captured in the step (404) of capture if a difference between a right wheel speed value (116) of the axle and a left wheel speed value (116) of the axle (108) is less than a limit value between the first vehicle state and the second vehicle state.

**3.** Method (400) according to either of Claims 1 and 2,
**characterized in that**
the second vehicle state is captured in the step of capture (404) if the slip increases or falls monotonically between the first vehicle state and the second vehicle state.

**4.** Method (400) according to any one of Claims 1 to 3,
**characterized in that**
the second vehicle step is captured in the step (404) of capture if the force value (128) increases or falls monotonically between the first vehicle state and the second vehicle state.

**5.** Method (400) according to either of Claims 3 and 4,
**characterized in that**
the second vehicle state is captured in the step (404) of capture if the monotonic state ends.

**6.** Method (400) according to any one of the preceding claims,
**characterized in that**
the load (122) is further ascertained using a slip stiffness value of the axle (108) in the step (402) of ascertainment, wherein the slip stiffness value represents slip stiffnesses of wheels of the axle (108).

**7.** Apparatus (102), configured to carry out and/or actuate the steps (402, 404) of the method (400) according to any one of the preceding claims in appropriate units.

**8.** Computer program, configured to execute the method (400) according to any one of the preceding claims if the computer program is executed on a computer or an apparatus.

**Revendications**

**1.** Procédé (400) d'estimation d'une répartition de charge sur essieu dans un train (100, 200) routier, dans lequel le procédé (400) a un stade (402) de la détermination, dans lequel on détermine au moins une charge (122) sur un essieu (128) du train (100, 200) routier en utilisant une valeur (126) de pseudo-glissement et une valeur (128) de force, dans lequel la valeur (126) de pseudo-glissement représente un pseudo-glissement entre l'essieu (108) et un autre essieu (110) du train (100, 200) routier et la valeur (128) de force représente une force (118) d'entraînement ou de décélération sur l'essieu (108)
**caractérisé en ce que** dans le stade (402) de la détermination on détermine la charge (122) en utilisant en outre une valeur (So) de pseudo-glissement à roulement libre, dans lequel la valeur (So) de pseudo-glissement à roulement libre représente le pseudo-glissement entre l'essieu (108) et l'autre essieu (110) lorsque la force (118) sur les deux essieux (108, 110) est plus petite qu'une valeur de seuil et dans lequel il est prévu un stade (404) de la détection, dans lequel en fonctionnement du train (100, 200) routier on détecte un premier état de véhicule et au moins un deuxième état de véhicule, dans lequel, dans le premier état de véhicule, on détecte une première valeur (126) de pseudo-glissement et une première valeur (128) de force et, dans le deuxième état de véhicule, on détecte une deuxième valeur (126) de pseudo-glissement et une deuxième valeur (128) de force, la valeur (So) de pseudo-glissement à roulement libre étant déterminée en utilisant le premier état du véhicule et le deuxième état de véhicule.

**2.** Procédé (400) suivant' la revendication 1,
**caractérisé en ce que**
au stade (404) de la détection, on détecte le deuxième état de véhicule lorsque, entre le premier état de véhicule et le deuxième état de véhicule, une différence entre une première valeur (116) de roue à droite de l'essieu et une valeur (116) de vitesse de roue à gauche de l'essieu (118) est plus petite qu'une valeur limite.

**3.** Procédé (400) suivant l'une des revendications 1 à 2,
**caractérisé en ce que**
au stade de la détection (404), on détecte le deuxième état de véhicule lorsque le pseudo-glissement entre le premier état de véhicule et le deuxième état de véhicule croît ou décroît de manière monotone.

**4.** Procédé (400) suivant l'une des revendications 1 à 3,
**caractérisé en ce que**
au stade (404) de la détection on détecte le deuxième état de véhicule lorsque la valeur (128) de force entre le premier état de véhicule et le deuxième état de véhicule croît ou décroît de manière monotone. ,

5. Procédé (400) suivant l'une des revendications 3 ou 4,
**caractérisé en ce que**
au stade (404) de la détection on détecte le deuxième état du véhicule lorsque la monotonie cesse.

6. Procédé (400) suivant l'une des revendications précédentes,
**caractérisé en ce que**
au stade (402) de la détermination on détermine la charge (122) en utilisant en outre une valeur de résistance au glissement de l'essieu (108) la valeur de résistance au glissement représentant des résistances au glissement de roue de l'essieu (108).

7. Système (102) qui est conçu pour effectuer et/ou commander les stades (402, 404) du procédé (400) suivant l'une des revendications précédentes dans des unités adéquates.

8. Programme d'ordinateur, qui est conçu pour effectuer les procédés (400) suivant l'une des revendications précédentes lorsque le programme d'ordinateur est réalisé sur un ordinateur ou un système.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005017577 A1
- EP 2371586 A1
- US 20070150172 A1